# EUROPEAN PATENT APPLICATION

(11) **EP 2 879 449 A1**
(43) Date of publication of application: **03.06.2015**
(21) Application number: 12881906.7
(22) Date of filing: 24.07.2012
(51) Int. Cl.: H04W 72/04, H04W 36/00

(54) **WIRELESS TERMINAL, WIRELESS BASE STATION, WIRELESS COMMUNICATION SYSTEM, AND WIRELESS COMMUNICATION METHOD**

(71) Applicant: Fujitsu Limited, Kawasaki-shi, Kanagawa 211-8588 (JP)
(72) Inventor: ODE, Takayoshi, Kawasaki-shi Kanagawa 211-8588 (JP); EZAKI, Takato, Kawasaki-shi Kanagawa 211-8588 (JP)
(74) Representative: Fenlon, Christine Lesley
(86) International application number: PCT/JP2012/004725
(87) International publication number: WO 2014/016870

(57) **Abstract**

An object of the disclosed technology is to provide a wireless communication system capable of performing efficient cell selection or cell reselection in a case where the number of DL carriers simultaneously used by a wireless terminal is larger than the number of UL carriers in carrier aggregation (CA). The disclosed wireless terminal is a wireless terminal that performs wireless communication of which the number of uplink carriers and the number of downlink carriers are different, the wireless terminal including a reception unit that receives information relating to a first carrier of which an uplink carrier and a downlink carrier are paired and a second carrier of which an uplink carrier and a downlink carrier are not paired, and a coupling unit that couples to a wireless base station using the first carrier based on the information.

## Description

### FIELD

The present invention relates to a wireless terminal, a wireless base station, a wireless communication system, and a wireless communication method.

### BACKGROUND

In recent years, in wireless communication systems such as mobile phone systems (cellular systems), in order to further increase the speed, bandwidth, and so forth of wireless communication, a next-generation wireless communication technology has been discussed. For example, in 3rd Generation Partnership Project (3GPP) serving as a standardization body, a communication standard called Long Term Evolution (LTE) and a communication standard based on the wireless communication technology of LTE and called LTE-Advanced (LTE-A) have been proposed.

The latest communication standard completed in 3GPP is Release 10 compatible with LTE-A, and this is obtained by substantially expanding the functions of Releases 8 and 9 compatible with LTE. Currently, discussion is advanced to the completion of Release 11 to which Release 10 is further expanded. Hereafter, unless otherwise noted, it is assumed that "LTE" includes other wireless communication systems to which LTE is expanded, in addition to LTE and LTE-A.

As a distinctive characteristic of an LTE-Advanced system, a transmission rate greater than LTE is cited. In LTE-Advanced, various technologies are adopted in order to enhance the transmission rate, and as one thereof, carrier aggregation (CA) is introduced. In what follows, the outline of CA will be described.

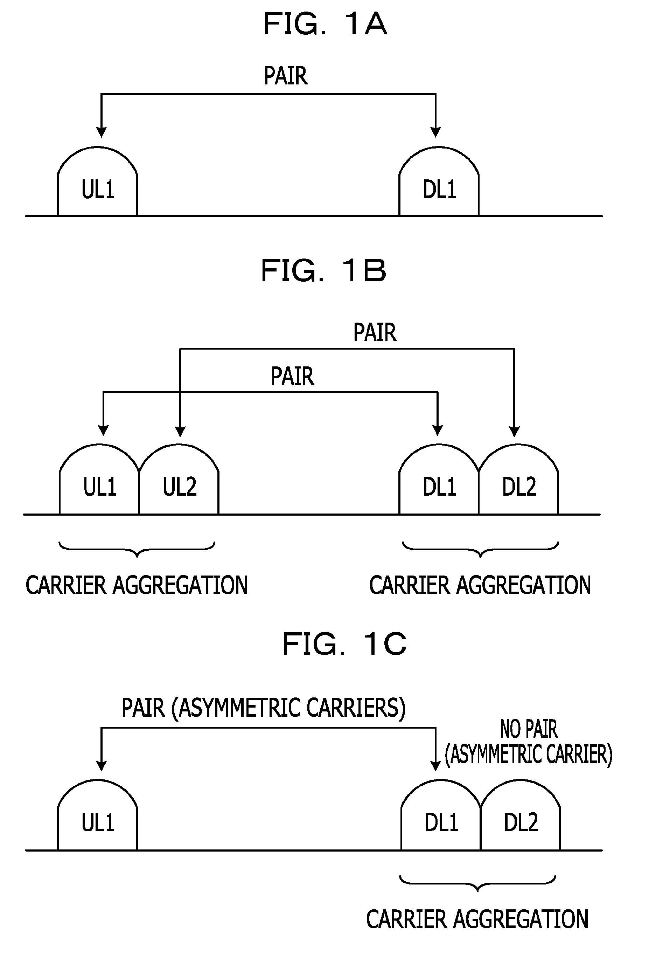

In general, since it is possible to send a lot of information in a case of a wider frequency bandwidth, the transmission rate becomes larger. A maximum frequency bandwidth supported in an existing LTE system (Release 8) is 20 MHz. Here, in a case of adopting FDD that serves as a duplex communication system becoming mainstream in LTE, a pair (pair) of two different frequency bands, in other words, a frequency band for an uplink (called an UL carrier in some cases) and a frequency band for a downlink (called a DL carrier in some cases), is prepared for a wireless terminal, and uplink transmission and downlink transmission are simultaneously performed using these frequency bands. In FIG. 1A, for example, a frequency band UL1 for an uplink and a frequency band DL1 for a downlink are paired. In this way, in the LTE system, the transmission rate of 100 Mb/s (5 bps/Hz) in the bandwidth of 20 MHz in a downlink and the transmission rate of 50 Mb/s (2.5 bps/Hz) in the bandwidth of 20 MHz in an uplink are realized.

On the other hand, along with the popularization of large-capacity content service such as video streaming, it is desired to improve the transmission rate. However, as described above, in the LTE system, there is a limitation that the maximum frequency bandwidth is 20 MHz. Therefore, even if another technique for improving transmission efficiency, such as MIMO provided in the past, is used, it is considered that there is a limitation on the improvement of the transmission rate.

Therefore, in Rel.10, a new elemental technology called CA has been studied. In CA, a component carrier (CC) serving as a bandwidth (20 MHz at a maximum) supported by the LTE system is defined as a basic unit, and communication is performed using simultaneously the CCs. In FIG. 1B, the frequency band UL1 for an uplink and the frequency band DL1 for a downlink are paired, and a frequency band UL2 for an uplink and a frequency band DL2 for a downlink are paired. In addition, UL1 and UL2 form an aggregated carrier for an uplink, and DL1 and DL2 form an aggregated carrier for a downlink.

CA enables broadband transmission that exceeds 20 MHz while maintaining backward compatibility with Rel.8. In FIG. 1B, in a case where each of UL1, UL2, DL1, and DL2 is, for example, 20 MHz, the bandwidth of 40 MHz becomes available in each of an uplink and a downlink. In Rel.10, by combining CA with the above-mentioned MIMO technique, it is possible to realize such high transmission rates as 1 Gbps in a downlink and 500 Mbps in an uplink at a maximum.

While, in CA, usually, the number of DL carriers and the number of UL carriers, simultaneously used by a wireless terminal, are equal to each other, the numbers of those may be asymmetric (not equal to each other). In LTE-Advanced, in particular, the user traffic of a downlink is usually higher than that of an uplink. Therefore, a scenario in which the number of DL carriers is larger than the number of UL carriers has been considered. While, in FIG. 1C, for example, the frequency band UL1 for an uplink and the frequency band DL1 for a downlink are paired, there is no frequency band for an uplink, which is to be paired with the frequency band DL2 for a downlink. In addition, UL1 is a single carrier while not forming an aggregated carrier, and DL1 and DL2 form an aggregated carrier for a downlink. Here, carriers paired in such a manner as UL1 and DL1 are called symmetric carriers, and a carrier paired with no carrier in such a manner as DL2 is called an asymmetric carrier.

### Citation List

### Non Patent Literature

NPL 1: 3GPP TS36.211 V10.4.0 (2011-12)
NPL 2: 3GPP TS36.212 V10.5.0 (2012-03)
NPL 3: 3GPP TR36.304 V10.5.0 (2012-03)
NPL 4: 3GPP TR36.300 V11.1.0 (2012-03)
NPL 5: 3GPP TR36.331 V10.5.0 (2012-03)
NPL 6: 3GPP TR36.101 V11.0.0 (2012-03)

### Patent Literature

PTL 1: Japanese Laid-open Patent Publication No. 2011-166712
PTL 2: Japanese Laid-open Patent Publication No. 2011-139461
PTL 3: Japanese National Publication of International Patent Application No. 2005-537217
PTL 4: Japanese Laid-open Patent Publication No. 11-046187

### SUMMARY

### Technical Problem

By the way, in general, when a wireless terminal is started up (powered on) or when the wireless terminal returns from a standby state (idle state), selection of a wireless base station is performed. The wireless terminal receives various types of control from the selected wireless base station, and in a case where data occurs, the wireless terminal couples to the selected wireless base station and performs transmission and reception of the relevant data. In addition, even if the wireless base station is selected once, in a case where a radio wave environment changes owing to movement or the like of the wireless terminal, reselection of a wireless base station is performed. Generally, on a moment-to-moment basis, the wireless terminal selects or reselects a wireless base station whose reception quality is good.

Here, the wireless base station may be rephrased as a carrier. Furthermore, the wireless base station or the carrier may be rephrased as a cell. The wireless base station is a physical device, the carrier is a carrier wave transmitted and received by the wireless base station, and the cell is a range or a region (communication zone) in which the wireless base station is able to communicate using the carrier. Therefore, while these are different concepts, generally these are used in approximately the same sense in many cases. Therefore, in the present application, it is assumed that the wireless base station, the cell, and the carrier may be arbitrarily read as one another.

Getting back to an original point, by detecting a wireless base station (alternatively, a cell or a carrier) using cell search and measuring a reception quality from each wireless base station, the selection or reselection of the wireless base station is performed. Here, a case where the number of DL carriers simultaneously used by the wireless terminal is larger than the number of UL carriers in such CA as described above is no exception, and it is desired to perform such cell selection or cell reselection. However, in the past, cell selection or cell reselection in such a case has not been studied, and there is a possibility that such a problem that it is difficult to efficiently perform using a method of the related art is included.

I n other words, efficient cell selection or cell reselection in a case where the number of DL carriers simultaneously used by the wireless terminal is larger than the number of UL carriers in CA has not been proposed before.

The disclosed technology is made in view of the above, and an object thereof is to provide a wireless communication system capable of performing efficient cell selection or cell reselection in a case where the number of DL carriers simultaneously used by a wireless terminal is larger than the number of UL carriers in CA.

### Solution to Problem

I n order to solve the above-mentioned problem and achieve the object, the disclosed wireless terminal is a wireless terminal that performs wireless communication of which the number of uplink carriers and the number of downlink carriers are different, the wireless terminal including a reception unit that receives information relating to a first carrier of which an uplink carrier and a downlink carrier are paired and a second carrier of which an uplink carrier and a downlink carrier are not paired, and a coupling unit that selects the first carrier, based on the information, and couples to a wireless base station.

### Advantageous Effects of Invention

According to one embodiment of a wireless terminal, a wireless base station, a wireless communication system, and a wireless communication method disclosed in this matter, an advantageous effect of being capable of performing efficient cell selection or cell reselection in a case where the number of DL carriers simultaneously used by a wireless terminal is larger than the number of UL carriers in CA is achieved.

### BRIEF DESCRIPTION OF DRAWINGS

FIGs. 1A to 1C are diagrams explaining carrier aggregation.
FIG. 2 is an example of a processing flow from when a wireless terminal performs cell search to when transmitting and receiving data.
FIG. 3 is a diagram illustrating an example of a cell list.
FIG. 4 is an example of a processing flow conceivable so that the wireless terminal does not perform cell selection on an asymmetric carrier.
FIG. 5 is another example of a processing flow conceivable so that the wireless terminal does not perform cell selection on an asymmetric carrier.
FIG. 6 is an example of a processing flow from when a wireless terminal in a first embodiment performs cell search to when transmitting and receiving data.
FIGs. 7A to 7C are diagrams illustrating examples of carrier symmetry information in the first embodiment.
FIG. 8 is a diagram illustrating an example of a processing sequence of a wireless communication system according to the first embodiment.
FIG. 9 is a diagram illustrating an example of a network configuration of the wireless communication system according to the first embodiment.
FIG. 10 is a diagram illustrating an example of a functional configuration of the wireless terminal in the first embodiment.
FIG. 11 is a diagram illustrating an example of a functional configuration of a wireless base station in the first embodiment.
FIG. 12 is a diagram illustrating an example of a hardware configuration of the wireless terminal in the first embodiment.
FIG. 13 is a diagram illustrating an example of a hardware configuration of the wireless base station in the first embodiment.
FIG. 14 is an example of a processing flow from when a wireless terminal in a second embodiment performs cell search to when transmitting and receiving data.
FIG. 15 is a diagram illustrating a format of SIB4 in an LTE system of the related art.
FIG. 16 is a diagram illustrating an example of a format of SIB4 in the second embodiment.
FIG. 17 is an example of a processing flow from when a wireless terminal in a third embodiment performs cell search to when transmitting and receiving data.
FIG. 18 is a diagram illustrating a format of a MeasObjectEUTRA information element in the LTE system of the related art.
FIG. 19 is a diagram illustrating an example of a format of a MeasObjectEUTRA information element in the third embodiment. wireless terminal wireless terminal

### DESCRIPTION OF EMBODIMENTS

Hereinafter, embodiments of disclosed wireless terminal, wireless base station, wireless communication system, and wireless communication method will be described with reference to drawings. I n addition, while, for convenience, individual embodiments will described as separate embodiments, it is to be understood that an advantageous effect of combination is obtained by combining the individual embodiments and furthermore it is possible to enhance utility.

### [a] Where Problem Lies

As described above, in the past, cell selection or cell reselection in a case where the number of DL carriers simultaneously used by a wireless terminal is larger than the number of UL carriers in CA has not been studied, and there is a possibility that such a problem that it is difficult to efficiently perform using a method of the related art is included. I n what follows, where a problem conceivable in the related art lies will be described before describing embodiments of the disclosed communication system, communication device, and communication method. This problem is newly found out by the inventor, as a result after a great deal of detailed consideration on the related art, and has not been known in the past.

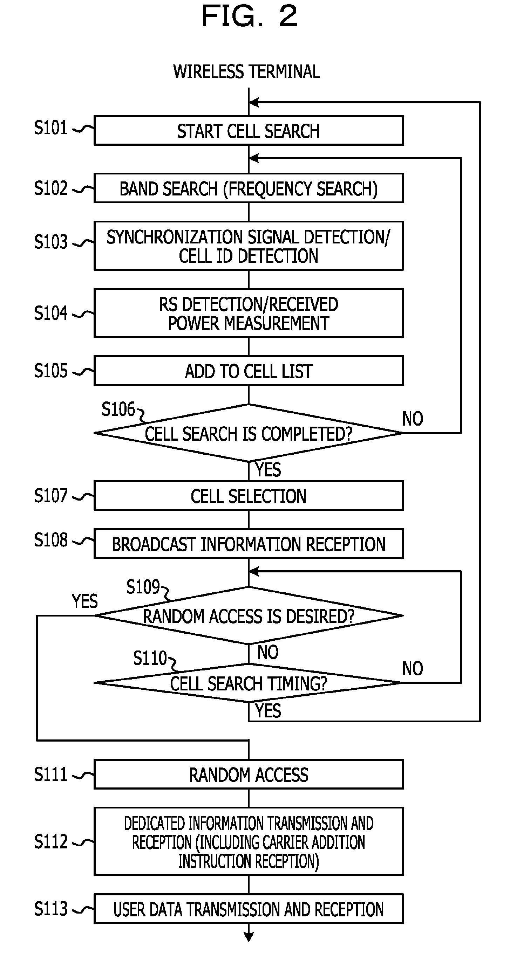

First, normal processing from when a wireless terminal is started to when CA of which the number of DL carriers is larger than the number of UL carriers is set will be described based on FIG. 2. Here, as an example, a case where the number of DL carriers is two and the number of UL carriers is one will be described. It is assumed that a symmetric carrier formed from an UL carrier UL1 and a DL carrier DL1 is CC1. It is assumed that an asymmetric carrier formed from only a DL carrier DL2 is CC2. It is assumed that CC1 and CC2 form an aggregated carrier.

Upon being started up, the wireless terminal starts cell search in S101 in FIG. 2. In S102, first, based on band search (frequency search), the wireless terminal selects one frequency within an entire frequency band and receives a DL wireless signal. I n addition, in S103, the wireless terminal detects a synchronization signal from the DL signal, and performs synchronization of the DL wireless signal (identification of the boundary of a DL frame, or the like). All DL wireless signals each include a synchronization signal of a specific pattern. I n a case where it is difficult to detect the synchronization signal, a cell utilizing the relevant frequency does not exist in a neighboring area. Therefore, another frequency is selected and measurement is performed.

In addition, in S103, the wireless terminal obtains a cell identification number, based on the pattern of the detected synchronization signal. I n an LTE system, as the synchronization signal, there are two of primary synchronization signal (PSS) and secondary synchronization signal (SSS), and from these, intragroup cell numbers (3 types) and cell group numbers (168 types) are individually obtained. I n addition, the cell identification numbers (3*168=504 types) are obtained from the intragroup cell numbers and the cell group numbers.

Next, in S104, the wireless terminal receives a reference signal (RS) within the DL signal. The reference signal is also called a pilot signal. The reference signal is subjected to scrambling by a cell identifier, and the arrangement thereof on a wireless frame is determined by the cell identifier. Therefore, based on the cell identifier obtained above, it is possible for the wireless terminal to identify the reference signal. In addition, in S104, the wireless terminal measures the received power of the reference signal. The received power is used as a basis for cell selection. In addition, a channel characteristic is estimated based on the reference signal, and demodulation of each channel becomes available based on the channel characteristic. From this, it becomes possible for the wireless terminal to receive data using DL. In this regard, however, in this stage, it has not been possible for the wireless terminal to transmit data using UL.

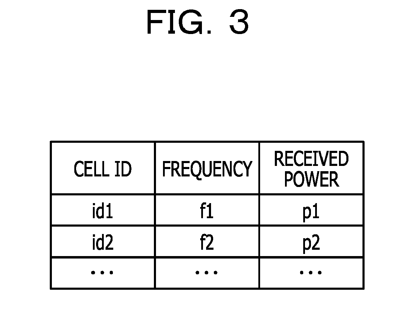

In S105, the wireless terminal stores therein once information relating to a searched cell. Here, as an example, such information is stored as a cell list. FIG. 3 illustrates an example of the cell list. The cell list includes an entry in which at least a cell identifier, a frequency, and received power are associated with one another. In S105, the wireless terminal adds, to the cell list, an entry in which at least the cell identifier, the frequency, and the received power, obtained above, are associated with one another.

In S106, the wireless terminal determines whether selection of all frequencies is completed (the cell search is completed). In a case where the cell search is not completed, a frequency is newly selected from among frequencies not selected and the processing operations in and after the synchronization signal detection are performed (in other words, S102 to S105 are repeated).

On the other hand, in a case where the cell search is completed, the wireless terminal performs cell selection in S107. In the cell selection, for example, a cell within the cell list, which has maximum received power, may be selected. In the cell selection, in order to avoid a frequent occurrence of cell selection (cell reselection) at a cell boundary, an offset value (broadcasted by broadcast information) may be used at the time of comparison of received power levels of individual cells. Here, it is assumed that, for example, a cell corresponding to CC1 is selected.

In addition, in S108, the wireless terminal receives the broadcast information from the selected cell. The broadcast information includes various kinds of information used by the wireless terminal to couple to the selected cell. For example, the broadcast information includes information indicating the downlink frequency band of the selected cell. I n addition, the broadcast information includes information indicating the uplink frequency band of the selected cell. The pieces of information indicating the respective frequency bands may be each indicated by a pair of a center frequency and a bandwidth.

In S109, the wireless terminal determines whether random access (RA) is desired. The random access indicates a connection request issued by the wireless terminal to a network side in a wireless communication system, and a wireless base station recognizes the existence of a wireless terminal controlled by the station itself, using the random access. In addition, a series of procedures including the random access is called a random access procedure in some cases. In LTE, the random access is performed in predetermined cases. The predetermined cases include, for example, the time of starting a wireless terminal, time when UL data or DL data occurs at the time of idling (the time of standby), the time of handover, and so forth.

In S109, in a case where the random access is not desired, the wireless terminal proceeds to S110. I n S110, the wireless terminal determines whether it is cell search timing. While generally the cell search is periodically performed based on an internal timer or the like, the cell search is performed in a case where a predetermined event is detected, in some cases. I n a case of being the cell search timing, the wireless terminal returns to S101 and performs the cell search. I n a case of not being the cell search timing, the wireless terminal returns to S109 and waits for a chance for the random access.

On the other hand, in a case where the random access is desired in S109, the wireless terminal proceeds to S111. In S111, the wireless terminal performs the random access procedure on the cell selected in S107. I n the random access procedure, a random access preamble is transmitted for the uplink frequency band of the selected cell, obtained by the wireless terminal from the broadcast information in S108. As the random access, there are a contention type and a non-contention type, and in any of these cases, the wireless terminal receives a random access response from the wireless base station. I n addition, here, the details of the random access procedure will be omitted. When the random access procedure is completed, the wireless terminal is able to achieve uplink synchronization with the wireless base station. From this, it becomes possible for the wireless terminal to perform UL data transmission.

Next, in S112, the wireless terminal performs transmission and reception of dedicated information with the wireless base station. Specifically, using signaling of Radio Resource Control (RRC), the wireless terminal and the wireless base station transmit and receive the dedicated information of the wireless terminal, used for wireless resource control. The dedicated information may be transmitted from the wireless base station to the wireless terminal, and may be transmitted from the wireless terminal to the wireless base station. In addition, there are many different types of dedicated information, and some thereof are transmitted and received while being organized, in some cases, and pass through transmission and reception several times as appropriate, in some cases.

In S112, using the signaling of RRC, the wireless terminal receives, from the wireless base station, for example, a carrier addition instruction serving as the dedicated information used for adding a carrier. I n this example, it is assumed that, using the signaling of RRC, the wireless terminal receives information used for adding the carrier CC2, from the wireless base station corresponding to CC1. Using the signaling of RRC, the wireless terminal may receive dedicated information other than this, from the wireless base station. For example, in association with the addition of a carrier, a carrier used by the wireless terminal to receive scheduling information may be designated. The corresponding scheduling information may be received for each carrier, and the scheduling information for all carriers may be received using a single carrier (such a scheduling method is called cross-carrier scheduling).

Next, in S113, the wireless terminal adds the carrier CC2 to the currently used carrier CC1, in accordance with the carrier addition instruction received in S112. From this, it becomes possible for the wireless terminal to perform transmission in an uplink using UL1 (transmit using only CC1) and perform reception in a downlink using simultaneously DL1 and DL2 (simultaneously receive using CC1 and CC2).

In S113, the wireless terminal performs transmission and reception of user data. At this time, as set in S112, it is possible for the wireless terminal to receive the DL data in DL using simultaneously CC1 and CC2 and transmit the UL data in UL using CC1. In other words, in LTE, using the above-mentioned procedure, data transmission and reception based on CA of which the number of DL carriers is larger than the number of UL carriers is realized.

In FIG. 2, it is assumed that the wireless terminal selects the cell corresponding to CC1 at the time of the cell selection in S107. A cell selected first in CA in such a manner as CC1 is called primary cell (PCell), and a cell added in such a manner as CC2 is called secondary cell (SCell). Here, while not only CC1 but also CC2 is able to be detected in the cell search, it is better for the wireless terminal not to select CC2 as PCell. If the wireless terminal selects CC2, it is difficult to perform the random access procedure after the cell selection because CC2 is an asymmetric cell including no UL carrier. Therefore, it is difficult for the network side (wireless base station) to recognize the wireless terminal, and thus, it becomes difficult for the wireless terminal to perform transmission and reception of individual data such as user data (it is possible to receive the broadcast information).

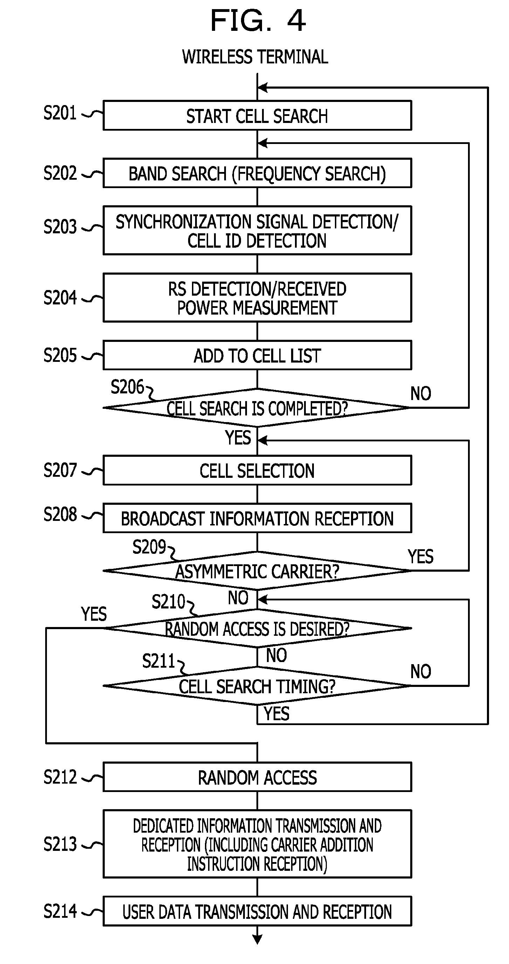

I n regard to this point, in what follows, a processing flow conceivable so that the wireless terminal does not select, as PCell, CC2 including no UL carrier will be described based on FIG. 4.

Since cell search in FIG. 4 (corresponding to S201 to S206) is the same as the cell search in FIG. 2 (corresponding to S101 to S106), the description thereof will be omitted. S207 and S208 in FIG. 4 are the same as S107 and S108 in FIG. 2. I n other words, in S207, the wireless terminal selects one cell, based on the cell list created in the cell search. Here, differently from FIG. 2, it is assumed that CC2 is selected. In addition, in S208, the wireless terminal receives the broadcast information from the selected cell. As described above, the broadcast information includes information relating to the uplink frequency of the wireless base station. The reason is to use for random access.

Here, as described above, it is better for the wireless terminal not to select, as PCell, an asymmetric cell of which a DL carrier and an UL carrier are not paired. Here, in S209, based on the uplink frequency band obtained from the broadcast information, the wireless terminal determines the presence or absence of an UL carrier in the cell selected in S207. I n a case where the selected cell includes no UL carrier (in a case where an UL carrier and a DL carrier are not paired), the wireless terminal determines not to set the selected cell as PCell. In this case, the wireless terminal returns to S207, and reselects another cell (for example, a cell whose received power is the largest next to the selected cell), based on the cell list. On the other hand, in a case where the selected cell includes an UL carrier (in a case where an UL carrier and a DL carrier are paired), the wireless terminal determines to set the selected cell as PCell, and proceeds to S210.

The determination in S209 is as follows, in this example. Since CC2 selected in S207 is an asymmetric carrier, the wireless terminal determines not to set CC2 as PCell, in S209. Therefore, the wireless terminal returns to S207, and performs cell selection again. If, in the second S207, the wireless terminal selects CC1, the wireless terminal receives the broadcast information from CC1 in the second S208. I n addition, in the determination in the second S209, CC1 is a symmetric carrier, and thus, the wireless terminal determines to set CC1 as PCell. After that, the wireless terminal proceeds to S210.

In addition, specifically, the determination in S209 may be performed as follows. For example, the cell CC2 including no UL carrier may broadcast the broadcast information in which predetermined values (for example, individually 0) are set in pieces of information indicating the uplink frequency band (for example, a pair of a center frequency and a bandwidth). In addition, in a case where the above-mentioned predetermined values are set in frequency information included in the received broadcast information, the wireless terminal is able to detect that the cell CC2 includes no UL carrier, and therefore, the wireless terminal is able to determine not to set CC2 as PCell. To the contrary, in a case where values other than the above-mentioned predetermined values are set in the frequency information included in the received broadcast information, the wireless terminal is able to detect that the corresponding cell includes an UL carrier, and therefore, the wireless terminal is able to determine to set the cell as PCell.

Returning to the description of FIG. 4, since S211 to S214 are the same as S111 to S114 in FIG. 2, the description thereof will be omitted. In this example, in S210, the wireless terminal performs the random access procedure on CC1 determined to be a symmetric carrier and determined to be PCell in the second S209. I n the random access procedure, based on the broadcast information received from CC1 in the second S208, the wireless terminal transmits the preamble of random access for the uplink frequency band of CC1.

From the above-mentioned procedure, it is possible for the wireless terminal to select symmetric CC of which an UL carrier and a DL carrier are paired, and perform coupling processing. However, in the above-mentioned procedure, in a case where a carrier whose received power level is a maximum compared with other received power levels is an asymmetric carrier of which an UL carrier and a DL carrier are not paired, it is desired to reselect a carrier after the reception of the broadcast information from the relevant carrier.

Here, when the wireless terminal receives the broadcast information in LTE, it is desired to receive firstly master information block (MIB) serving as the broadcast information including information indicating the downlink frequency band, to receive next, based on MIB, system information block (SIB) 1 serving as the broadcast information including information indicating the broadcast timing of other broadcast information, and to further receive, based on SIB1, SIB2 to 13 serving as other pieces of broadcast information as appropriate. I n this way, since the wireless terminal is desired to receive the broadcast information in stages, it is desired to be routed through several sub-frames in order to complete reception of the broadcast information. Therefore, undesired reception of the broadcast information leads to a delay of the coupling processing. I n addition, a case where an asymmetric carrier of which an UL carrier and a DL carrier are not paired is selected at the time of performing cell selection again is conceivable, and in that case, a connection delay associated with broadcast information reception is further lengthened. Summarizing the above, in the procedure illustrated in FIG. 4, there is a problem that undesired reception of the broadcast information causes the coupling processing of the wireless terminal to be delayed.

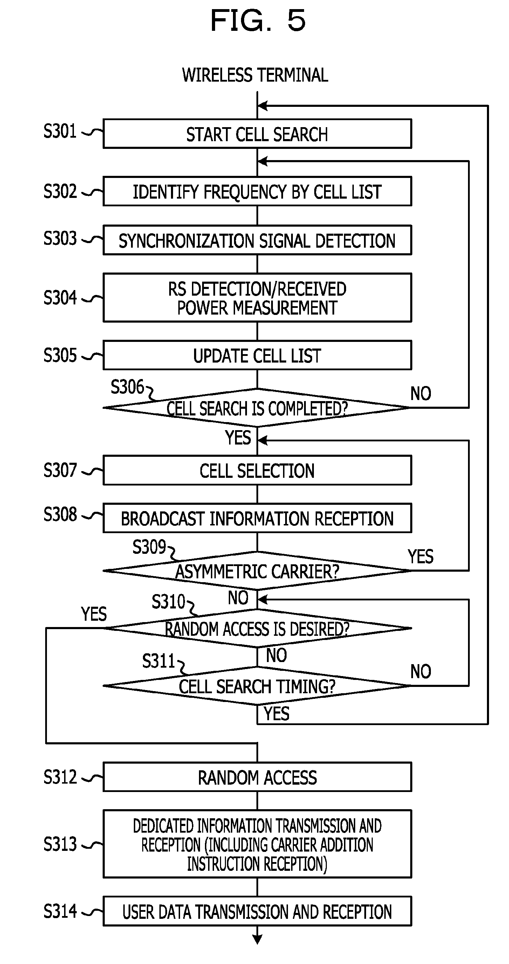

By the way, as a technique for reducing the delay of coupling processing at the time of starting a wireless terminal, or the like, there has been a technique for reducing time taken for cell search, using stored information. FIG. 5 illustrates a procedure of a wireless terminal, which includes cell search in a case of utilizing the stored information.

FIG. 5 is based on the assumption that the wireless terminal performed the cell search in past times, based on, for example, the procedure illustrated in FIG. 4, and a cell list created at that time is held in a storage device such as a memory included in the wireless terminal. When the wireless terminal starts the cell search in S301 in FIG. 5, the wireless terminal recognizes, in S302, the frequency of a cell, based on the stored cell list, instead of performing the band search in such a manner as in S202 in FIG. 4. Since S303 to S304 in FIG. 5 are approximately the same as S203 to S204 in FIG. 4, the description thereof will be omitted. I n addition, in S303, the cell ID doesn't have to be detected in such a manner as in S203. The reason is that the wireless terminal has already recognized the cell ID using the cell list. In S305 in FIG. 5, the wireless terminal updates the "received power" of an entry in the cell list with respect to a currently searched cell. Here, it is not desired to update the "cell ID" and the "frequency" within the cell list. Since S306 to S314 in FIG. 5 are the same as S206 to S214 in FIG. 4, the description thereof will be omitted.

Using the result of the cell search of the past in such a manner as in FIG. 5, it is possible to omit the time-consuming band search. From this, it is possible to shorten time taken for the cell search, and furthermore, it becomes possible to reduce the delay of the coupling processing at the time of starting the wireless terminal, or the like. Note that it is desirable that this method is performed during a time period from when the stored cell search is performed till when the wireless terminal does not move too far. The reason is that if the wireless terminal moves to such an extent that a cell serving as a target of the cell search becomes entirely different, meaning of reusing the stored cell search result becomes reduced.

However, even by doing in such a manner as in FIG. 5, a problem of redoing the broadcast information reception, based on such redoing of the cell selection as described above, is not solved. Accordingly, in a case of any one of FIG. 4 and FIG. 5, the desirability of solving the above-mentioned problem remains.

The disclosed technology is embodied based on it that the inventor newly found out such a problem as described above.

### [b] First Embodiment

A first embodiment for solving the above-mentioned problem will be described as an example. The first embodiment is that a wireless terminal receives in advance, from a wireless base station, information relating to a symmetric carrier of which an uplink carrier and a downlink carrier are paired and an asymmetric carrier of which an uplink carrier and a downlink carrier are not paired. I n addition, the wireless terminal selects the symmetric carrier, based on the received information, and couples to the wireless base station.

Here, in a broad sense, "coupling" means that preparation for user data transmission and reception is completed, and in, for example, FIG. 4, "coupling" corresponds to the procedure routed through the broadcast information reception in S208 to the random access in S212 and routed to the dedicated information transmission and reception in S213. In this regard, however, in the present application, it is assumed that, in a narrower sense, "coupling" may represent a procedure including, for example, at least one of the broadcast information reception in S208, the random access in S212, and the dedicated information transmission and reception in S213, in FIG. 4.

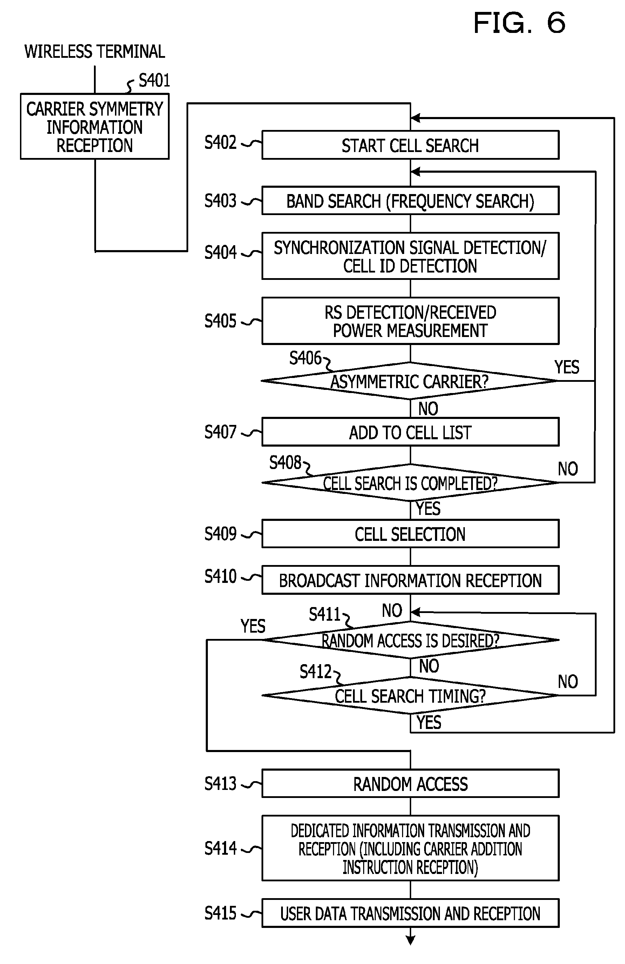

Based on FIG. 6, the processing flow of the wireless terminal of the first embodiment will be described. Note that FIG. 6 solves the problem described above for the processing flow in FIG. 4. However, note that, in the same way as this, it is possible to solve the problem described above for the processing flow in FIG. 5 (a detailed processing flow and the description thereof will be omitted).

First, in S401, the wireless terminal receives, from the wireless base station, information relating to a symmetric carrier of which an uplink carrier and a downlink carrier are paired and an asymmetric carrier of which an uplink carrier and a downlink carrier are not paired. I n the present application, for the sake of convenience, this information is called carrier symmetry information.

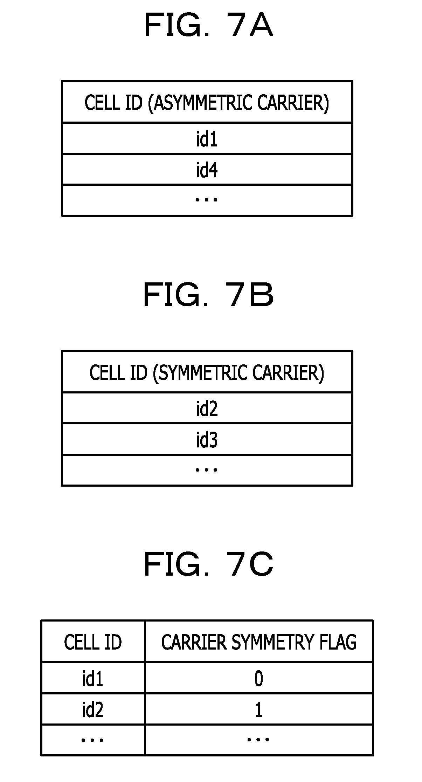

FIG. 7 illustrates an example of the carrier symmetry information. As an example, as illustrated in FIG. 7A, the carrier symmetry information may be defined as information indicating one or more asymmetric carriers in each of which an uplink carrier and a downlink carrier are not paired. The carrier symmetry information in FIG. 7A lists cell I Ds corresponding to the respective asymmetric carriers. In addition, as another example, as illustrated in FIG. 7B, the carrier symmetry information may be defined as information indicating one or more symmetric carriers in each of which an uplink carrier and a downlink carrier are paired. The carrier symmetry information in FIG. 7A lists cell IDs corresponding to the respective symmetric carriers.

Furthermore, as another example, as illustrated in FIG. 7C, the carrier symmetry information may be defined as information indicating one or more asymmetric carriers in each of which an uplink carrier and a downlink carrier are not paired and one or more symmetric carriers in each of which an uplink carrier and a downlink carrier are paired. The carrier symmetry information in FIG. 7C lists entries in each of which a cell ID and a flag (one bit) indicating carrier symmetry are associated with each other. For example, a carrier symmetry flag in the example of FIG. 7C may be set so as to become zero in a case where the cell ID corresponds to an asymmetric carrier and become one in a case where the cell ID corresponds to a symmetric carrier. I n addition, while, in FIG. 7C, the cell ID and the carrier symmetry flag are associated with each other, information other than this may be used as information to be associated with the cell ID. The information to be associated with the cell ID may be, for example, arbitrary information of two bits or more. As an example, the information to be associated with the cell ID may be the center frequency or bandwidth of the relevant cell or the combination thereof.

I n this way, the carrier symmetry information does not have to be information indicating both an asymmetric carrier and a symmetric carrier. The reason is that since the other is able to be naturally discriminated if one of the asymmetric carrier and the symmetric carrier is indicated, even in a case of being information only indicating one, the information is nothing short of "information relating to a symmetric carrier and an asymmetric carrier".

While the carrier symmetry information is information transmitted by the wireless base station to the wireless terminal through a DL carrier, the target range of a carrier indicated by the carrier symmetry information may be defined as an arbitrary carrier including at least one carrier other than a carrier corresponding to the relevant DL carrier. The wireless base station may define, for example, a plurality of carriers provided by the station itself, as the target range. I n addition, the wireless base station may define, as the target range, a carrier provided by a wireless base station adjacent to the station itself or a wireless base station neighboring the station itself. I n this regard, however, in a case where a carrier defined as the target range by the carrier symmetry information is only a carrier transmitting and receiving the relevant symmetry information, meaning of the carrier symmetry information is reduced. The reason is that such information may be obtained (using the broadcast information of the related art) while the wireless base station does not separately notify the wireless terminal of the information.

Returning to FIG. 6, in S402, cell search is started. While S403 and S404 in FIG. 6 correspond to S202 and S203 in FIG. 4, respectively and thus, the description thereof will be omitted, the wireless terminal detects, based thereon, a cell I D from a DL reception signal.

Next, in S405 in FIG. 6, based on the carrier symmetry information received in S401 and the cell I D detected in S404, the wireless terminal determines whether a carrier corresponding to the cell I D is an asymmetric carrier or a symmetric carrier. If the carrier symmetry information indicates, for example, one or more cell IDs corresponding to the asymmetric carrier, in a case where the cell I D detected in S404 is included in the one or more indicated cell IDs, it is determined that the relevant detected cell I D corresponds to the asymmetric carrier. As another example, if the carrier symmetry information indicates, for example, one or more cell IDs corresponding to the symmetric carrier, in a case where the cell I D detected in S404 is not included in the one or more indicated cell IDs, it is determined that the relevant detected cell I D corresponds to the asymmetric carrier.

In a case where, in S405, it is determined to be the asymmetric carrier, the wireless terminal returns to S403 in order to continue the cell search using another frequency. The reason is that since, in the asymmetric carrier, it is difficult to perform random access, and furthermore, it is difficult to perform transmission and reception of user data, to be entered into the cell list (in other words, to be defined as a target of the cell selection) is not adequate. On the other hand, in a case where, in S405, it is determined to be the symmetric carrier, the wireless terminal proceeds to RS detection and RS received power measurement in S406.

Since S406 to S410 in FIG. 6 correspond to S204 to S208 in FIG. 4, respectively, the description thereof will be omitted. Here, note that, in FIG. 6, after broadcast information reception (S410), determination of symmetry of a cell is not performed in the same way as in FIG. 4 (S209). The reason is that since, in FIG. 6, the same determination is performed in S405, the cell that received the broadcast information has already been determined to be the symmetric cell. Since S411 to S415 in FIG. 6 correspond to S210 to S214 in FIG. 4, respectively, the description thereof will be omitted.

Since, in the first embodiment, as illustrated in FIG. 5, an asymmetric cell is shaken down in the stage of the cell search, only a symmetric cell is entered into the cell list to server as a target of the cell selection. Since, from this, the asymmetric cell is not selected in the cell selection, it is possible to avoid repeated reception of the broadcast information, caused by such selection of the asymmetric cell as illustrated in FIG. 4. Therefore, in the first embodiment, reception of the broadcast information associated with the cell selection is performed only once, and thus, it becomes possible to suppress the connection delay of the wireless terminal.

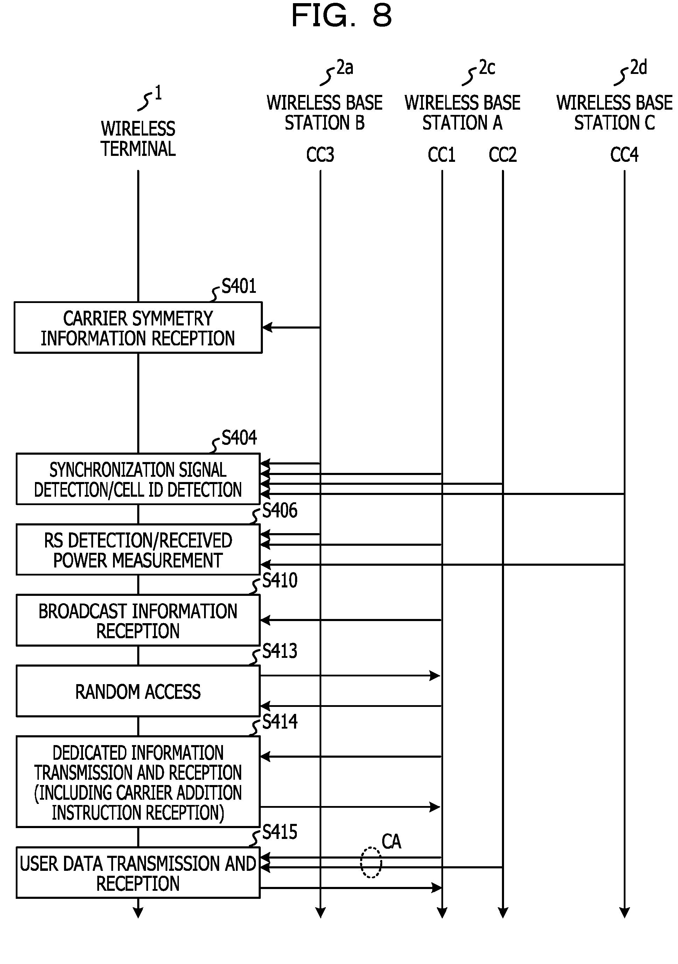

Next, based on FIG. 8, a processing sequence between a wireless terminal and a wireless base station in the wireless communication system of the first embodiment will be described. Individual processing operations in FIG. 8 correspond to respective processing operations in the processing flow of the wireless terminal illustrated in FIG. 6. In addition, in FIG. 8, processing performed within the wireless terminal (the wireless terminal by itself) in FIG. 6 is omitted.

FIG. 8 illustrates a transmission and reception relationship of wireless signals between the wireless terminal and wireless base stations A to C. Here, it is assumed that the wireless base stations A to C are deployed so as to be located relatively close to one another. It is assumed that the wireless base station A is able to perform carrier aggregation on two carrier components CC1 and CC2. Here, it is assumed that CC1 is a symmetric carrier and CC2 is an asymmetric carrier including only a DL carrier. In addition, it is assumed that the wireless base station B uses one carrier component CC3. It is assumed that the wireless base station C uses one carrier component CC4.

First, in S401 in FIG. 8, the wireless terminal receives the carrier symmetry information using CC3. It is assumed that, at this time, the carrier symmetry information received by the wireless terminal includes information indicating carrier symmetry of CC1 and CC2.

In S404 in FIG. 8, the wireless terminal performs synchronization signal detection/cell ID detection on each of CC1 to 4. In S405 not illustrated in FIG. 8, based on the received carrier symmetry information, the wireless terminal understands that CC2 is an asymmetric cell. Therefore, in S406 in FIG. 8, the wireless terminal performs RS detection/received power measurement on each of CC1, CC3, and CC4, and does not perform RS detection/received power measurement on CC2. It is assumed that, in S409 not illustrated in FIG. 8, the wireless terminal selects CC1 serving as a symmetric cell. In FIG. 8, the wireless terminal receives the broadcast information from CC1 in S410, and performs the random access procedure on CC1 in S413. In FIG. 8, in S414, the wireless terminal receives dedicated information from CC1, and transmits dedicated information to CC1. It is assumed that, at this time, the wireless terminal receives, from CC1, a carrier addition instruction serving as dedicated information to the effect that CC2 is to be added. In S415 in FIG. 8, the wireless terminal performs transmission and reception of user data. At this time, the wireless terminal receives DL data from CC1 and CC2 to which the carrier aggregation is applied, and transmits UL data using only CC1.

Subsequent to the above-described processing in the wireless communication system of the first embodiment, the configuration of the wireless communication system of the first embodiment will be described hereinafter.

FI G. 9 illustrates the network configuration of the wireless communication system of the first embodiment. The present embodiment is an embodiment in a wireless communication system compliant with LTE. Therefore, some LTE-specific terms and concepts will appear. However, note that the present embodiment is just an example and application to a wireless communication system compliant with a communication standard other than LTE is available.

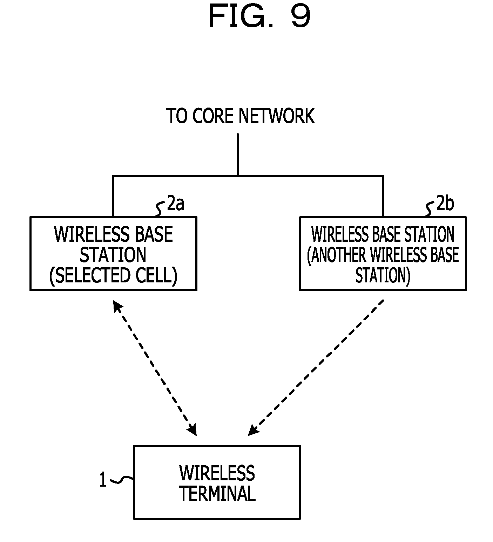

The wireless communication system illustrated in FIG. 9 includes a wireless terminal 1 (user equipment: UE), a wireless base station 2 (evolved Node B: eNB), and so forth. In some case, the wireless terminal 1 and the wireless base station 2 are collectively called wireless stations.

A wireless network between the wireless terminal 1 and the wireless base stations 2 is called a wireless access network. The wireless base stations 2 are coupled to each other using a wired or wireless network (transmission network) called a backhaul network. The backhaul network is a network that couples the wireless base stations 2 to each other and couples the wireless base stations 2 and a core network to each other. Through the backhaul network, each of the wireless base stations 2 is able to communicate with a device coupled to the core network. Mobility Management Entity (MME), System Architecture Evolution Gateway (SAE-GW), and so forth are coupled to the core network. In addition, an LTE network is called Evolved Packet System (EPS) in some cases. EPS includes Evolved Universal Terrestrial Radio Network (eUTRAN) serving as the wireless access network and Evolved Packet Core (EPC) serving as the core network. The core network is called System Architecture Evolution (SAE) in some cases.

The wireless terminal 1 (called a wireless mobile terminal, a mobile terminal, or simply a terminal in some cases, or called a user device, a subscriber station, a mobile station, or the like in some cases) in FIG. 9 is a device that performs wireless communication with the wireless base stations 2 through the wireless access network. The wireless terminal 1 performs transmission and reception of data using wireless communication with a coupled wireless base station 2a, and furthermore, receives various types of control by exchanging various kinds of control information using the wireless communication with the coupled wireless base station 2a. In addition, as appropriate, the wireless terminal 1 performs measurement or the like of a wireless signal from another wireless base station (adjacent wireless base station or neighboring wireless base station) 2b other than the coupled wireless base station.

The wireless terminal 1 may be a mobile phone, a smartphone, Personal Digital Assistant (PDA), a personal computer, or the like. In addition, in a case where a relay station that relays the wireless communication between the wireless base stations 2 and the terminal is used, the relevant relay station (transmission and reception with the wireless base stations and the control thereof) may be included in the wireless terminal 1 of the present application.

On the other hand, each of the wireless base stations 2 (simply called a base station in some cases) in FIG. 9 is a device that performs wireless communication with the wireless terminal 1 through the wireless access network and is coupled to the backhaul network. Each of the wireless base stations 2 performs transmission and reception of data with the controlled wireless terminal 1 (also called a coupled wireless terminal), and furthermore, performs various types of control on the wireless terminal 1 by exchanging various kinds of control information with the controlled wireless terminal 1. In addition, one of the wireless base stations 2 and the other wireless base station 2 relay data with each other through the backhaul network, and furthermore, one of the wireless base stations 2 is able to collaborate by exchanging various kinds of control information with the other wireless base station 2.

Through the backhaul network, the wireless base stations 2 each exchange various kinds of control information with a control device such as MME coupled to a core network beyond the backhaul network. In addition, the wireless base stations 2 each relay data received from the controlled wireless terminal 1, to a relay device such as SAE-GW coupled to the core network, and each relay data received from the relay device such as SAE-GW, to the controlled wireless terminal 1.

The wireless base station 2 may be wired-coupled to the backhaul network, and may be wireless-coupled thereto. In addition, in each of the wireless base stations 2, a wireless communication function with the wireless terminal 1 through the wireless access network, and digital signal processing and a control function may be separated into different devices. In this case, a device equipped with the wireless communication function is called remote radio head (RRH), and a device equipped with the digital signal processing and the control function is called base band unit (BBU). RRH may be installed so as to be pulled out from BBU, and therebetween, wired coupling may be established using an optical fiber or the like. In addition, each of the wireless base stations 2 may be one of wireless base stations of various sizes in addition to small wireless base stations (including a micro wireless base station, a femto wireless base station, and so forth) such as a macro wireless base station and a pico wireless base station. In addition, in a case where a relay station that relays wireless communication between a base station and the wireless terminal 1 is used, the relevant relay station (transmission and reception with the wireless terminal and the control thereof) may be included in the wireless base station 2 of the present application.

The wireless communication system of the present embodiment uses an Orthogonal Frequency Division Multiple Access (OFDMA) method, as a wireless access method for DL. In addition, as a wireless access method for UL, a Single Carrier Frequency Division Multiple Access (SC-FDMA) method is used.

In the wireless communication system of the present embodiment, a DL wireless signal and a UL wireless signal are each configured from a wireless frame (simply called a frame in some cases) of a predetermined length (for example, 10 milliseconds). Furthermore, each one of the wireless frames is configured from a predetermined number (for example, 10) of wireless sub-frames (simply called sub-frames in some cases) that each have a predetermined length (for example, 1 millisecond). In addition, each sub-frame is configured from 12 or 14 symbols. In addition, since the "frame" and the "sub-frame" are just terms indicating processing units of a wireless signal, how to read these terms may be arbitrarily changed.

In the physical layer of LTE, some physical channels are defined. For example, as the physical channels of DL, there are a downlink shared channel (Physical Downlink Shared CHannel: PDSCH) used for transmission of a DL data signal or the like, a downlink control channel (Physical Downlink Control CHannel: PDCCH) used for transmission of a DL control signal, and so forth. The term, DL control signal, here is a control signal for transmitting control information directly used for PDSCH transmission, and is a control signal of a physical layer (or Layer1) level. In contrast, a control signal of an upper layer is transmitted using PDSCH. In addition, while, as described above, the size of a control signal region in a DL sub-frame is variable (one to three symbols from the top of the DL sub-frame 1), Physical Control Format Indicator CHannel (PCFICH) for giving notice of the size exists in the control signal region of each DL sub-frame. On the other hand, as the physical channels of UL, there are an uplink shared channel (Physical Uplink Shared CHannel: PUSCH) used for transmission of a UL data signal or the like, an uplink control channel (Physical Uplink Control CHannel: PUCCH) used for transmission of a UL control signal including a response signal to a DL data signal and a DL wireless characteristic measurement result, and so forth.

In addition to the DL data signal and the DL control signal, a DL reference signal used for demodulating the DL data signal and the DL control signal or used for measuring a wireless characteristic, and so forth are mapped to the DL sub-frame. In addition to the UL data signal and the UL control signal, a UL reference signal used for demodulating a UL signal or used for measuring a wireless characteristic, and so forth are mapped to the UL sub-frame.

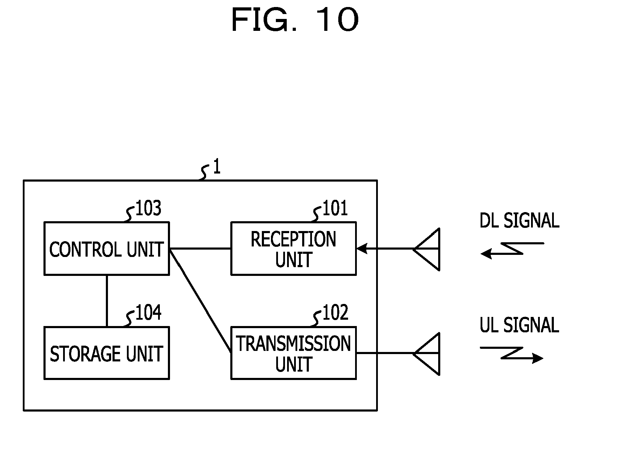

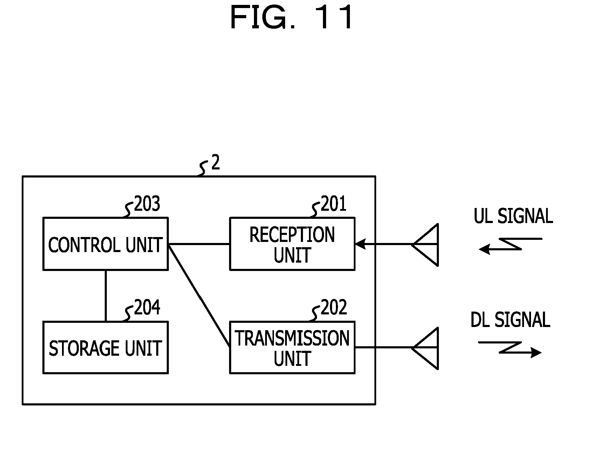

Next, based on FIGs. 10 and 11, the functional configurations of the wireless terminal 1 and the wireless base station 2 according to the first embodiment are illustrated.

FIG. 10 is a diagram illustrating an example of the functional configuration of the wireless terminal 1 in the first embodiment. The wireless terminal 1 includes, for example, a reception unit 101, a transmission unit 102, a control unit 103, and a storage unit 104. Since these are functions in the wireless terminal, the reception unit 101, the transmission unit 102, the control unit 103, and the storage unit 104 may be referred to as, for example, a wireless terminal reception unit 101, a wireless terminal transmission unit 102, a wireless terminal control unit 103, and a wireless terminal storage unit 104, respectively.

The reception unit 101 receives the DL wireless signal (DL carrier) from the wireless base station. In addition, the reception unit 101 down-converts the received DL wireless signal by frequency conversion or the like, and converts into a baseband signal corresponding to a DL frame. The reception unit 101 is able to receive, for example, a wireless signal corresponding to an arrow headed from each wireless base station (or each CC) to the wireless terminal in FIG. 8. Specifically, the reception unit 101 is able to receive, from the wireless base stations, for example, the carrier symmetry information, the synchronization signal, RS, the broadcast information, the DL signal (random access response or the like) in the random access procedure, the dedicated information (carrier addition instruction or the like) of DL, and the user data of DL. The reception unit 101 may receive, from the wireless base stations, arbitrary DL wireless signals other than these.

The transmission unit 102 transmits the UL wireless signal (UL carrier) to the wireless base station. In addition, the transmission unit 102 generates the UL wireless signal by up-converting a baseband signal corresponding to a UL frame by frequency conversion or the like. The transmission unit 102 is able to transmit, to each wireless base station, for example, a wireless signal corresponding to an arrow headed from the wireless terminal to each wireless base station (or each CC) in FIG. 8. Specifically, the transmission unit 102 is able to transmit, to the wireless base stations, for example, the UL signal (random access preamble or the like) in the random access procedure, the dedicated information of UL, and the user data of UL. The transmission unit 102 may transmit, to the wireless base stations, an arbitrary UL wireless signal other than these.

The control unit 103 performs various types of control or processing on the baseband signal corresponding to the DL frame. In addition, the control unit 103 performs various types of control or processing, and generates the baseband signal corresponding to the UL frame. As appropriate, the control unit 103 is able to perform, on the storage unit 104, storage of information, referencing of the stored information, update of the stored information, deletion of the stored information, and so forth. The control unit 103 is able to perform, for example, each control operation or processing operation in the wireless terminal illustrated in FIG. 6 or FIG. 8. Specifically, the control unit 103 is able to perform, for example, control or processing relating to carrier symmetry information reception, starting of cell search, band search (frequency search), synchronization signal detection/cell ID detection, determination of an asymmetric carrier, RS detection/received power measurement, addition to the cell list, determination of completion of cell search, cell selection, broadcast information reception, determination of whether random access is desired, determination of cell search timing, random access, dedicated information transmission and reception (including carrier addition instruction reception), and user data transmission and reception. The control unit 103 may perform arbitrary control or processing other than these.

The storage unit 104 stores therein various kinds of information. The storage unit 104 is able to store therein, for example, the cell list. The storage unit 104 may store therein arbitrary information other than this.

FIG. 11 is a diagram illustrating an example of the functional configuration of one of the wireless base stations 2 in the first embodiment. The wireless base station 2 includes, for example, a reception unit 201, a transmission unit 202, a control unit 203, and a storage unit 204. Since these are functions in the wireless base station, the reception unit 201, the transmission unit 202, the control unit 203, and the storage unit 204 may be referred to as, for example, a wireless base station reception unit 201, a wireless base station transmission unit 202, a wireless base station control unit 203, and a wireless base station storage unit 204, respectively.

The reception unit 201 receives the UL wireless signal (UL carrier) from the wireless terminal. In addition, the reception unit 201 down-converts the received UL wireless signal by frequency conversion or the like, and converts into a baseband signal corresponding to the UL frame. The reception unit 201 is able to receive, for example, a wireless signal corresponding to an arrow headed from the wireless terminal to each wireless base station (or each CC) in FIG. 8. Specifically, the reception unit 201 is able to receive, from the wireless terminal, for example, the UL signal (random access preamble or the like) in the random access procedure, the dedicated information of UL, and the user data of UL. The reception unit 201 may receive, from the wireless terminal, arbitrary DL wireless signals other than these.

The transmission unit 202 transmits the DL wireless signal (DL carrier) to the wireless terminal. I n addition, the transmission unit 202 generates the DL wireless signal by up-converting a baseband signal corresponding to the DL frame, using frequency conversion or the like. The transmission unit 202 is able to transmit, to the wireless terminal, for example, a wireless signal corresponding to the arrow headed from each wireless base station (or each CC) to the wireless terminal in FIG. 8. Specifically, the transmission unit 202 is able to transmit, to the wireless terminal, for example, the carrier symmetry information, the synchronization signal, RS, the broadcast information, the DL signal (random access response or the like) in the random access procedure, the dedicated information (carrier addition instruction or the like) of DL, and the user data of DL. The transmission unit 202 may transmit, to the wireless terminal, an arbitrary DL wireless signal other than these.

The control unit 203 performs various types of control or processing on the baseband signal corresponding to the UL frame. In addition, the control unit 203 performs various types of control or processing, and generates the baseband signal corresponding to the DL frame. As appropriate, the control unit 203 is able to perform, on the storage unit 204, storage of information, referencing of the stored information, update of the stored information, deletion of the stored information, and so forth. The control unit 203 is able to perform, for example, individual control operations or processing operations relating to the wireless signals transmitted and received by the wireless base station in FIG. 8. Specifically, the control unit 203 is able to perform, for example, control or processing relating to carrier symmetry information transmission, synchronization signal transmission/cell ID transmission, RS transmission, broadcast information transmission, random access, dedicated information transmission and reception (including carrier addition instruction transmission), and user data transmission and reception. The control unit 203 may perform arbitrary control or processing other than these.

The storage unit 204 stores therein various kinds of information. The storage unit 204 may store therein arbitrary information.

In addition, the functional configuration of the wireless base station 2 in the first embodiment is not limited to FIG. 11. For example, the reception unit 201 and the transmission unit 202 are allowed not to be included, in such a manner as the above-mentioned BBU. I n addition, the wireless base station 2 may adopt a configuration including only the control unit 203.

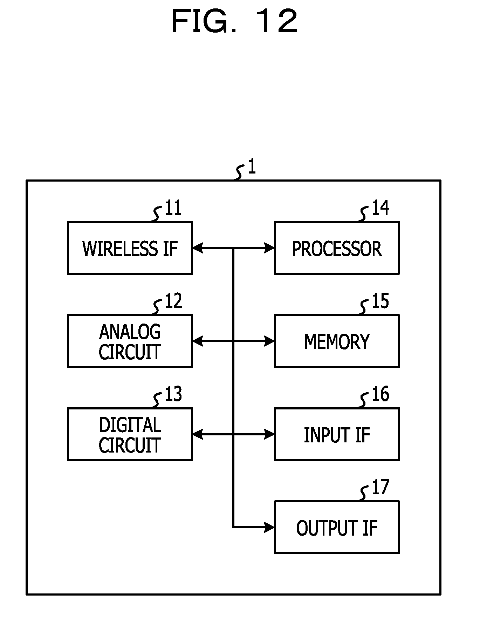

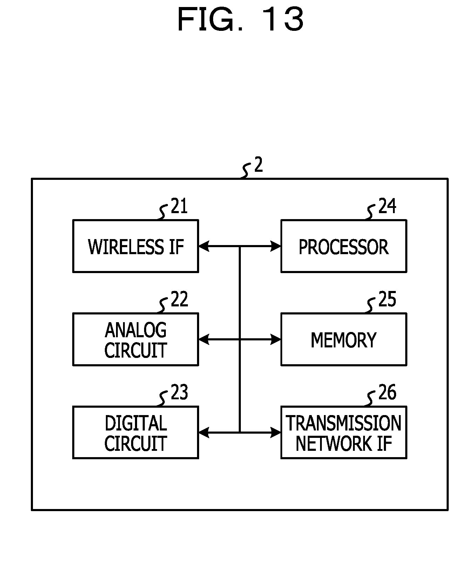

Next, the hardware configurations of the wireless terminal and the wireless base station in the wireless communication system of the first embodiment will be described based on FIGs. 12 and 13.

In FIG. 12, an example of the hardware configuration of the wireless terminal 1 in the first embodiment will be described. Each function of the above-mentioned wireless terminal 1 is realized by part or all of the following hardware components. The wireless terminal 1 in the above-mentioned embodiment includes a wireless IF (Interface) 11, an analog circuit 12, a digital circuit 13, a processor 14, a memory 15, an input IF 16, an output IF 17, and so forth.

The wireless IF 11 is an interface device for performing wireless communication with the wireless base station 2, and is, for example, an antenna. The analog circuit 12 is a circuit that processes an analog signal, and may be classified roughly into an analog circuit that performs reception processing, an analog circuit that performs transmission processing, and an analog circuit that performs other processing.

As the analog circuit that performs reception processing, for example, a low noise amplifier (LNA), a band pass filter (BPF), a mixer, a low pass filter (LPF), an automatic gain-controlled amplifier (automatic gain controller: AGC), an analog-to-digital converter (ADC), a phase synchronization circuit (phase locked loop: PLL), and so forth are included. As the analog circuit that performs transmission processing, for example, a power amplifier (PA), BPF, a mixer, LPF, a digital-to-analog converter (DAC), PLL, and so forth are included. As the analog circuit that performs the other processing, a duplexer and so forth are included. The digital circuit 13 includes, for example, application specific integrated circuit (ASIC), field-programming gate array (FPGA), large scale integration (LSI), and so forth. The processor 14 is a device that processes data, and includes, for example, central processing unit (CPU), digital signal processor (DSP), and so forth. The memory 15 is a device that stores therein data, and includes, for example, read only memory (ROM), random access memory (RAM), and so forth. The input IF 16 is a device that performs inputting, and includes, for example, an operation button, a microphone, and so forth. The output IF 17 is a device that performs outputting, and includes, for example, a display, a speaker, and so forth.

A correspondence relationship between the functional configuration and hardware configuration of the wireless terminal 1 will be described.

The reception unit 101 is realized by, for example, the wireless IF 11, and the analog circuit 12 (that performs reception processing). I n other words, the wireless IF 11 receives the DL wireless signal from the wireless base station 2, and the analog circuit 12 down-converts the received DL wireless signal using frequency conversion or the like and converts the received DL wireless signal into a baseband signal corresponding to the DL frame.

The transmission unit 102 is realized by, for example, the wireless IF 11, and the analog circuit 12 (that performs transmission processing). In other words, the analog circuit 12 up-converts, to a wireless signal, an input baseband signal corresponding to the UL frame, using frequency conversion or the like, and the wireless IF 11 wirelessly transmits the relevant wireless signal to the wireless base station. In addition, while the transmission unit 101 and the reception unit 102 may be realized by the different wireless IFs 11 (antennas), one wireless IF 11 may be shared using a duplexer serving as the analog circuit 12.

The control unit 103 is realized by, for example, the processor 14 and the digital circuit 13. I n other words, the processor 14 collaborates with the digital circuit 13 as appropriate, performs various types of control or processing on the baseband signal corresponding to the DL frame, and generates the baseband signal corresponding to the UL frame by performing various types of control or processing. I n addition, by collaborating with the digital circuit 13 as appropriate, the processor 14 is able to perform, for example, each control operation or processing operation in the wireless terminal, illustrated in FIG. 6 or FIG. 8. Specifically, by collaborating with the digital circuit 13 as appropriate, the processor 14 is able to perform control or processing relating to the carrier symmetry information reception, the starting of cell search, the band search (frequency search), the synchronization signal detection/cell ID detection, the determination of an asymmetric carrier, the RS detection/received power measurement, the addition to the cell list, the determination of completion of cell search, the cell selection, the broadcast information reception, the determination of whether random access is desired, the determination of cell search timing, the random access, the dedicated information transmission and reception (including carrier addition instruction reception), and the user data transmission and reception. By collaborating with the digital circuit 13 as appropriate, the processor 14 may perform arbitrary control or processing other than these.

The storage unit 104 is realized by, for example, the memory 15. I n other words, the memory 15 stores therein various kinds of information. The memory 15 is able to store therein, for example, the cell list. The memory 15 may store therein arbitrary information other than this.

In FIG. 13, an example of the hardware configuration of the wireless base station 2 in the first embodiment will be described. Each function of the above-mentioned wireless base station 2 is realized by part or all of the following hardware components. The wireless base station 2 in the above-mentioned embodiment includes a wireless IF 21, an analog circuit 22, a digital circuit 23, a processor 24, a memory 25, a transmission network IF 26, and so forth.

The wireless IF 21 is an interface device for performing wireless communication with the wireless terminal 1, and is, for example, an antenna. The analog circuit 22 is a circuit that processes an analog signal, and may be classified roughly into an analog circuit that performs reception processing, an analog circuit that performs transmission processing, and an analog circuit that performs other processing. As the analog circuit that performs reception processing, for example, LNA, BPF, a mixer, LPF, AGC, ADC, PLL, and so forth are included. As the analog circuit that performs transmission processing, for example, PA, BPF, a mixer, LPF, DAC, PLL, and so forth are included. As the analog circuit that performs the other processing, a duplexer and so forth are included. The digital circuit 23 is a circuit that processes a digital signal, and includes, for example, ASIC, FPGA, LSI, and so forth. The processor 24 is a device that processes data, and includes, for example, CPU, DSP, and so forth. The memory 25 is a device that stores therein data, and includes, for example, ROM, RAM, and so forth. The transmission network IF 26 is an interface device for coupling to the backhaul network of the wireless communication system using a wired line or a wireless line and performing wire communication or wireless communication with devices on a transmission network side, which include the other wireless base station 2 coupled to the backhaul network or the core network.

A correspondence relationship between the functional configuration and hardware configuration of the wireless base station 2 will be described.

The reception unit 201 is realized by, for example, the wireless IF 21, and the analog circuit 22 (that performs reception processing). I n other words, the wireless IF 21 receives the UL wireless signal from the wireless terminal 1, and the analog circuit 22 down-converts the received UL wireless signal using frequency conversion or the like and converts the received UL wireless signal into a baseband signal corresponding to the UL frame.

The transmission unit 202 is realized by, for example, the wireless IF 21, and the analog circuit 22 (that performs transmission processing). In other words, the analog circuit 22 up-converts, to a wireless signal, an input baseband signal corresponding to the DL frame, using frequency conversion or the like, and the wireless IF 21 wirelessly transmits the relevant wireless signal to the wireless base station. In addition, while the transmission unit 201 and the reception unit 202 may be realized by the different wireless IFs 21 (antennas), one wireless IF 21 may be shared using a duplexer serving as the analog circuit 22.

The control unit 203 is realized by, for example, the processor 24 and the digital circuit 23. In other words, the processor 24 collaborates with the digital circuit 23 as appropriate, performs various types of control or processing on the baseband signal corresponding to the UL frame, and generates the baseband signal corresponding to the DL frame by performing various types of control or processing. In addition, by collaborating with the digital circuit 23 as appropriate, the processor 24 is able to perform, for example, each control operation or processing operation in the wireless terminal, illustrated in FIG. 6 or FIG. 8. Specifically, by collaborating with the digital circuit 23 as appropriate, the processor 24 is able to perform control or processing relating to the carrier symmetry information transmission, the synchronization signal transmission/cell ID transmission, the RS transmission, the broadcast information transmission, the random access, the dedicated information transmission and reception (including carrier addition instruction transmission), and the user data transmission and reception. By collaborating with the digital circuit 23 as appropriate, the processor 24 may perform arbitrary control or processing other than these.

The storage unit 204 is realized by, for example, the memory 25. In other words, the memory 25 stores therein various kinds of information. The memory 25 may store therein arbitrary information.

In addition, the hardware configuration of the wireless base station 2 in the first embodiment is not limited to FIG. 13. For example, the wireless IF 21 and the analog circuit 22 are allowed not to be included, in such a manner as the above-mentioned BBU, and a configuration excluding only the wireless IF 21 may be adopted. In addition, the wireless base station 2 may adopt a configuration including only a processor and a memory, and may adopt a configuration including only a digital circuit.

### [c] Second Embodiment

A second embodiment describes a more specific embodiment regarding the carrier symmetry information in the first embodiment.

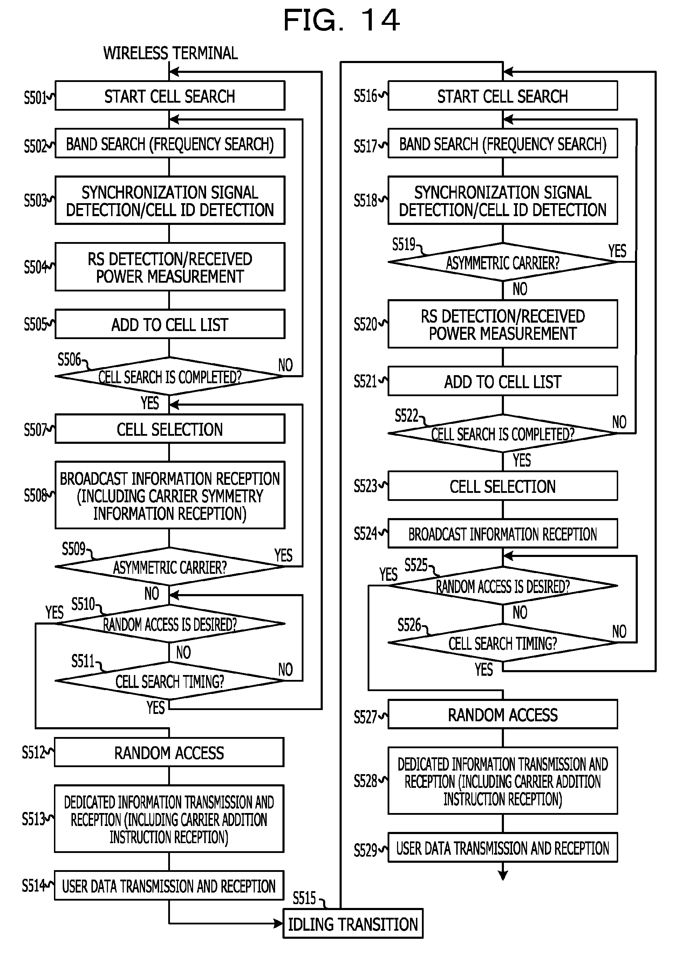

FIG. 14 illustrates the processing flow of a wireless terminal of the second embodiment. In the processing flow in FIG. 14, a series of processing operations (for the sake of convenience, called a "coupling processing procedure"), which ranges from the cell search to the user data transmission and reception and roughly corresponds to FIG. 4, FIG. 6, or the like, is performed twice. First, S501 to S514 in FIG. 14 correspond to the first coupling processing procedure. Owing to disconnection of transmission and reception of the user data, or the like, the wireless terminal shifts once from a connection state (an RRC_CONNECTED state and a state in which the wireless terminal currently performs communication) to an idle state (an RRC_IDLE state and a so-called standby state) in S515. Periodically or at the time of the occurrence of a predetermined event, the wireless terminal in the idle state performs the cell search and performs the cell selection (cell reselection) (S516 to S523). In addition, by performing random access on the reselected cell as appropriate, the wireless terminal returns from the idle state, and transmits and receives the user data (S524 to S529). S516 to S529 after this idle state shift correspond to the second coupling processing procedure.

Hereinafter, FIG. 14 will be specifically described. First, S501 to S514 corresponding to the first coupling processing procedure roughly correspond to S201 to S214 in FIG. 4. I n this regard, however, since being slightly different from S207 to S209, only S507 to S509 will be described.

First, in S507, the wireless terminal performs cell selection. Here, in a case where the cell selection in S507 is the first one (in a case of proceeding from S506 to S507), the wireless terminal performs the cell selection in just the same way as in S207. I n addition, the wireless terminal proceeds to S508, and performs reception of the broadcast information.

Here, the broadcast information of an existing LTE will be described. As described above, the broadcast information of LTE includes MIB and SIB1 to SIB13, and various kinds of information (parameters) are included in each thereof. The wireless terminal is desired to receive MIB, SIB1, and SIB2, and SIB3 to SIB13 other than these are options and received as appropriate.

SIB4 and SIB5 include parameters used for cell reselection extending over LTE wireless base stations (eNBs). SIB4 corresponds to cell reselection between LTE wireless base stations within a same frequency band, and SIB5 corresponds to cell reselection between LTE wireless base stations in different frequency bands. While hereinafter an example in which the present invention is applied to SIB4 will be described, the same may apply to SIB5.

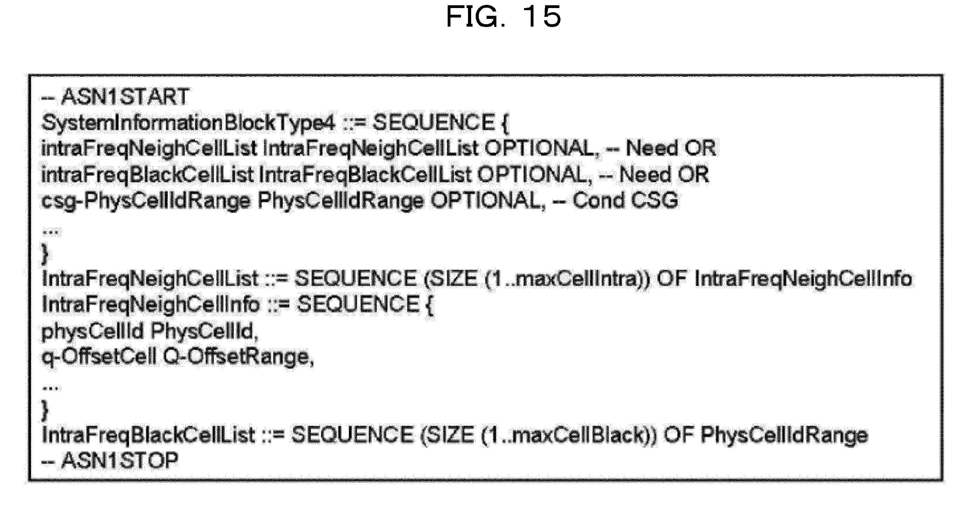

FIG. 15 illustrates the format of SIB4 of LTE of the related art. SIB4 includes information relating to an adjacent cell (neighboring cell). The information relating to an adjacent cell, included in SIB4, is used at the time of cell reselection.

In FIG. 15, IntraFreqNeighCellList is the list of an adjacent cell. IntraFreqNeighCellList corresponds to the list of an adjacent cell that may be a candidate for cell selection (cell reselection). IntraFreqNeighCellList includes one or more IntraFreqNeighCellInfos. Each IntraFreqNeighCellInfo includes information (parameter) relating to each adjacent cell. As illustrated in FIG. 15, IntraFreqNeighCellInfo includes a parameter physCellId or q-OffsetCell. physCellId corresponds to a cell ID (physical cell identifier). q-OffsetCell is an offset value used in received power comparison between cells at the time of the cell reselection.

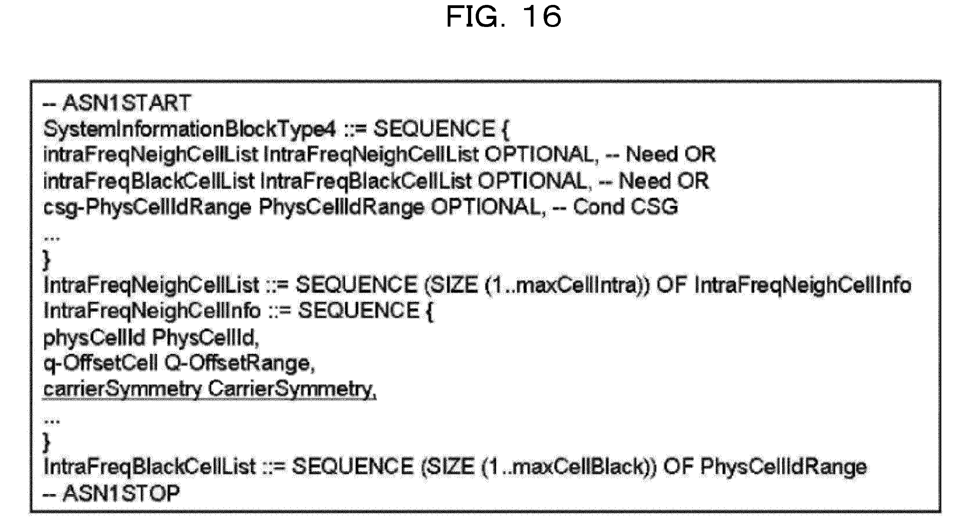

FIG. 16 illustrates an SIB4 format in the second embodiment. In the SIB4 format illustrated in FIG. 16, a parameter CarrierSymmetry is added to each IntraFreqNeighCellInfo (an underlined portion), compared with the format illustrated in FIG. 15. CarrierSymmetry corresponds to the carrier symmetry information in the first embodiment, and corresponds to "the information relating to a symmetric carrier and an asymmetric carrier". As an example, CarrierSymmetry may be defined as 1-bit information indicating whether or not a corresponding cell (carrier) is an asymmetric carrier. In this regard, however, if being information capable of identifying whether the corresponding cell is a symmetric carrier or an asymmetric carrier, CarrierSymmetry is not limited to this.

Returning to the description of FIG. 14, in S508, the wireless terminal receives, from the cell selected in S507, the broadcast information including the carrier symmetry information. More specifically, in S508, from the cell selected in S507, the wireless terminal receives, for example, SIB4 (or SIB5) serving as the broadcast information including the above-mentioned parameter CarrierSymmetry.

Next, in S509, the wireless terminal performs determination of whether the cell selected in S507 is an asymmetric carrier. Here, in a case where the determination in S509 is the first one (in a case of proceeding to S506, S507, S508, and S509 in order), the wireless terminal performs determination of whether of being an asymmetric carrier, based on SIB2, in the same way as in S209. In a case where the determination in S509 is the first one, the carrier symmetry information received in S508 is allowed not to be used.

Here, it is assumed that, in the first S509, the selected carrier is determined to be an asymmetric carrier. At this time, the wireless terminal proceeds to S507, and performs the second S507.

In a case where the cell selection in S507 is the second one (in a case of proceeding from S509 to S507), the wireless terminal is able to use the carrier symmetry information received in S508, in the cell selection. Specifically, in the second S507, the wireless terminal is able to select a cell from among carriers identified as symmetric carriers by the carrier symmetry information. From this, except in an exceptional case in which there is no symmetric carrier identifiable based on the carrier symmetry information, the wireless terminal is able to reliably select a symmetric carrier in the second S507. The wireless terminal continuously proceeds to the second S508 and S509 in order. In the second S209, the wireless terminal is able to proceed to S510 except in the above-mentioned exceptional case. I n other words, except in the above-mentioned exceptional case, the loop of S507 to S509 in FIG. 14 is performed up to a maximum of two times. There is a possibility that the loop of S207 to S209 in FIG. 4 is performed three times or more. Therefore, in FIG. 14, there is a possibility that it is possible to suppress the number of times the broadcast information is received (S508), compared with FIG. 4.

Since S516 to S529 corresponding to the second coupling processing procedure in FIG. 14 correspond to S402 to S415 in FIG. 6 serving as the processing flow of the first embodiment, the description thereof will be omitted. In S519, based on the carrier symmetry information received in S508, the wireless terminal determines whether of being an asymmetric carrier. From this, in the second embodiment, it becomes possible to suppress repetition of reception of the broadcast information (S524), in the same way as in the first embodiment.

Since a processing sequence, a network configuration, the functional configurations of the wireless terminal and the wireless base station, and the hardware configurations of the wireless terminal and the wireless base station in the second embodiment are equivalent to those in the first embodiment, the description thereof will be omitted.

### [d] Third Embodiment

I n the same way as the second embodiment, the third embodiment describes a more specific embodiment regarding the carrier symmetry information in the first embodiment.

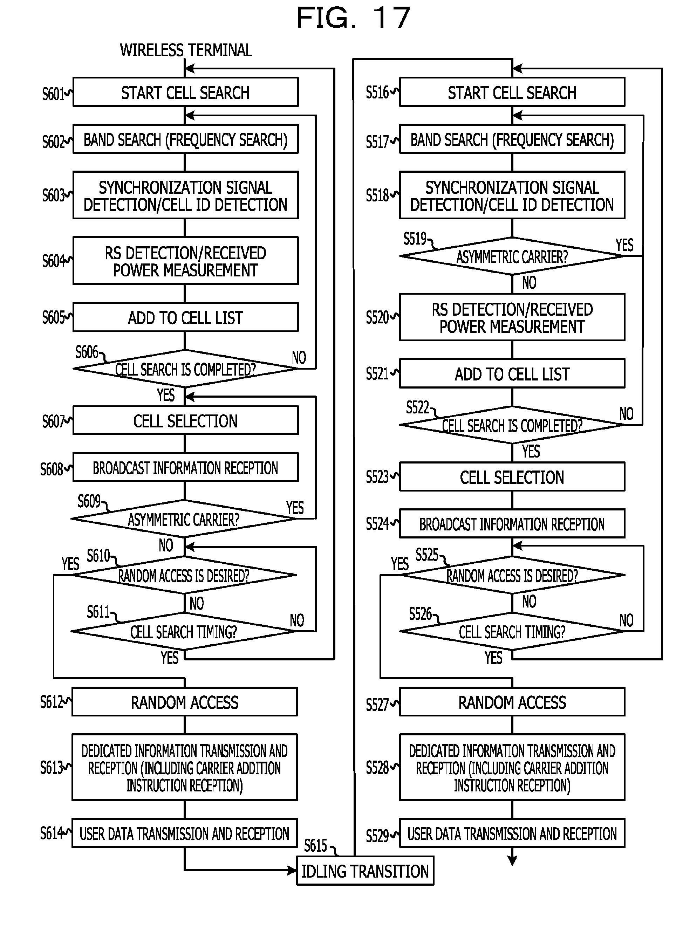

FIG. 17 illustrates the processing flow of a wireless terminal of the third embodiment. I n the same way as FIG. 14, FIG. 17 includes the two coupling processing procedures. S601 to S629 in FIG. 17 approximately correspond to S501 to S529 in FIG. 14. Therefore, here, FIG. 17 will be described while being limited to a point different from FIG. 14.

S607 to S609 in FIG. 17 correspond not to S507 to S509 in FIG. 14 but to S207 to S209 in FIG. 4. I n other words, in S608, the wireless terminal is allowed not to receive the broadcast information including the carrier symmetry information. I n addition, in S607 to S609, processing for suppressing a loop count is allowed not to be performed, as S507 to S509 are described.

In S613 in FIG. 17, the wireless terminal receives the dedicated information.

Here, the dedicated information of the existing LTE will be described. The dedicated information in LTE is called radio resource control (RRC) signaling. As one RRC signaling, there is an RRCConnectionReconfiguration message. The RRCConnectionReconfiguration message is the RRC signaling used for changing RRC connection, and is transmitted from the wireless base station so as to be headed to the wireless terminal.

As the change of the RRC connection, performed by the RRCConnectionReconfiguration message, there are various changes, and as one thereof, there are an instruction for and a change of measurement. Mainly for the purpose of selection of a target cell (alternatively, a handover destination cell or a handover destination wireless base station) at the time of handover, the wireless terminal in LTE measures the received power or reception quality of a wireless signal at the time of connection (RRC_CONNECTED). The instruction for and the change of this measurement are performed by the wireless base station on the wireless terminal, based on the RRCConnectionReconfiguration message.

For the purpose of the instruction for and the change of the measurement, the RRCConnectionReconfiguration message may include a MeasConfig information element indicating a target of measurement. Furthermore, the Measconfig information element may include a MeasObject information element serving as information for indicating a cell (a carrier or a wireless base station) to serve as a measurement target. There are various kinds of MeasObject information elements, and as information for indicating an LTE-compliant cell to serve as a measurement target, there is a MeasObjectEUTRA information element.

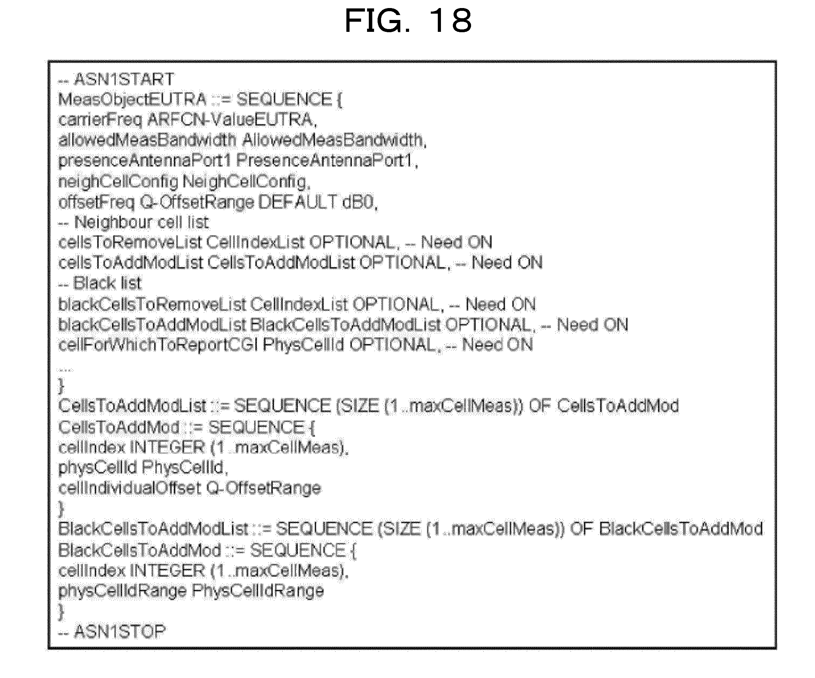

FIG. 18 illustrates the format of the MeasObjectEUTRA information element of LTE of the related art. In FIG. 18, CellsToAddModList is the list of a measurement target cell. CellsToAddModList corresponds to the list of an adjacent cell serving as a measurement target, in other words, the list of an adjacent cell that may be a candidate for a target cell (a cell of a handover destination). CellsToAddModList include one or more CellsToAddMods. Each CellsToAddMod includes information (parameter) relating to each measurement target cell. As illustrated in FIG. 18, CellsToAddMod includes parameters cellIndex, physCellId, and cell IndividualOffset. cellIndex corresponds to the index (identifier) of a cell used in a measurement report. physCellId corresponds to a cell ID (physical cell identifier). cellIndividualOffset is an offset value used in comparison of measurement results between cells at the time of determination of handover (at the time of selection of a target cell).

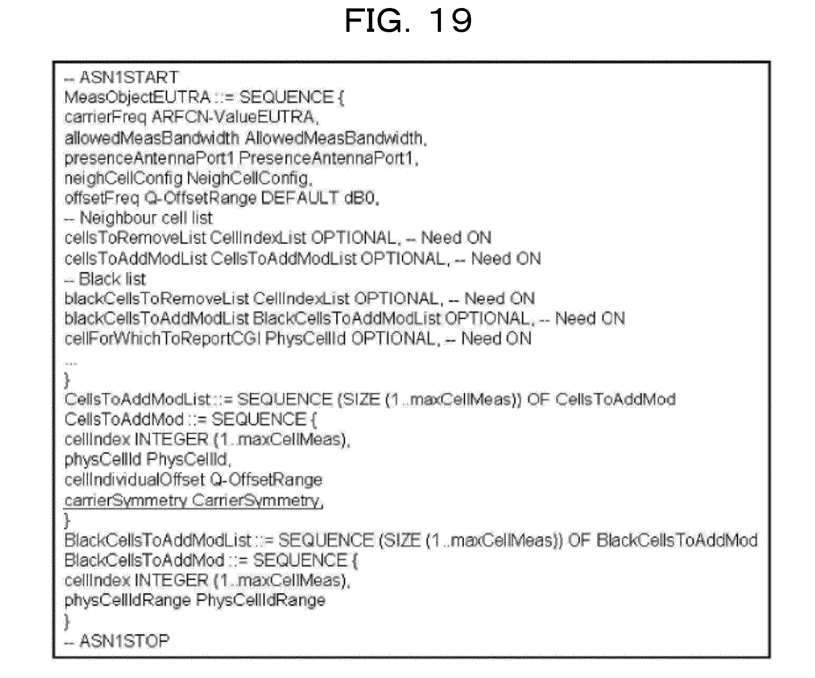

FIG. 19 illustrates the format of the MeasObjectEUTRA information element in the third embodiment. In the format of the MeasObjectEUTRA information element, illustrated in FIG. 19, the parameter CarrierSymmetry is added to each CellsToAddMod (an underlined portion), compared with the format illustrated in FIG. 18. CarrierSymmetry corresponds to the carrier symmetry information in the first embodiment, and corresponds to "the information relating to a symmetric carrier and an asymmetric carrier". As an example, CarrierSymmetry may be defined as 1-bit information indicating whether or not a corresponding cell (carrier) is an asymmetric carrier. In this regard, however, if being information capable of identifying whether the corresponding cell is a symmetric carrier or an asymmetric carrier, CarrierSymmetry is not limited to this.

Returning to the description of FIG. 17, in S613, the wireless terminal receives the dedicated information including the carrier symmetry information, from the cell that is selected in S607 and on which the random access is performed in S612. More specifically, in S613, the wireless terminal receives the RRCConnectionReconfiguration message serving as the dedicated information including the above-mentioned parameter CarrierSymmetry, from the cell that is selected in S607 and on which the random access is performed in S612.

Since S616 to S629 corresponding to the second coupling processing procedure in FIG. 17 correspond to S402 to S415 in FIG. 6 serving as the processing flow of the first embodiment or S516 to S529 in FIG. 14 serving as the processing flow of the second embodiment, the description thereof will be omitted. In S619, based on the carrier symmetry information received in S613, the wireless terminal determines whether of being an asymmetric carrier. From this, in the third embodiment, it becomes possible to suppress repetition of reception of the broadcast information (S624), in the same way as in the first embodiment or the second embodiment.

Since a processing sequence, a network configuration, the functional configurations of the wireless terminal and the wireless base station, and the hardware configurations of the wireless terminal and the wireless base station in the third embodiment are equivalent to those in the first embodiment, the description thereof will be omitted.

### [e] Fourth Embodiment

The first to third embodiments each solve a problem based on an asymmetric carrier at the time of cell selection (cell reselection). I n contrast, a fourth embodiment solves a problem based on an asymmetric carrier at the time of handover.

The outline of handover processing in a usual LTE system will be described. As described in the third embodiment, a serving cell transmits, to the wireless terminal, the RRCConnectionReconfiguration message corresponding to a measurement instruction including designation of a cell of a measurement target. Based on the received RRCConnectionReconfiguration message, the wireless terminal transmits, to the serving cell, a measurement report including the above-mentioned measurement result. Based on the measurement report, the serving cell determines implementation of handover and a target cell (a negotiation is performed between the serving cell and the target cell at the time of the determination). The serving cell transmits, to the wireless terminal, a handover instruction message in which the target cell is designated. The wireless terminal performs the random access on the target cell designated in the received handover instruction message. From this, the wireless terminal is coupled to the target cell, and after that, performs reception of data transferred from the serving cell to the target cell, and the handover is completed.

In this way, in the handover processing, the wireless terminal is desired to perform the random access on the target cell. However, as described above, it is difficult for the wireless terminal to perform the random access on an asymmetric carrier. Therefore, it is undesirable that an asymmetric carrier is selected as the target cell. The reason is that since the random access by the wireless terminal fails, selection of the target cell is redone, and the delay of the handover processing increases.

Therefore, in the fourth embodiment, the serving cell (serving wireless base station) preliminarily understands whether or not each adjacent cell (adjacent wireless base station) is an asymmetric carrier. In addition, at the time of the handover of the wireless terminal, the serving cell tries not to determine an asymmetric carrier as the target cell (target wireless base station). I n other words, at the time of the handover of the wireless terminal, the serving cell determines a symmetric carrier as the target cell (target wireless base station).

Since, by doing so, an asymmetric carrier is not selected as the target cell, it becomes possible to suppress an increase in the delay of the handover processing.

Since a processing sequence, a network configuration, the functional configurations of the wireless terminal and the wireless base station, and the hardware configurations of the wireless terminal and the wireless base station in the fourth embodiment are equivalent to those in the first embodiment, the description thereof will be omitted. In addition, at the time of handover, the serving cell (serving wireless base station) is called a source cell (alternatively, a handover source cell or a handover source wireless base station) in some cases.

### [f] Fifth Embodiment

I n the same way as the fourth embodiment, a fifth embodiment solves a problem based on an asymmetric cell at the time of handover.

As described in the fourth embodiment, it is undesirable that an asymmetric carrier is selected as the target cell. In order to solve this problem, a serving cell in the present embodiment issues a measurement instruction to the wireless terminal using, for example, the RRCConnectionReconfiguration message in the third embodiment. Here, the RRCConnectionReconfiguration message in the third embodiment includes CarrierSymmetry serving as a parameter indicating whether or not each adjacent cell is an asymmetric carrier. Based on CarrierSymmetry included in the received RRCConnectionReconfiguration message, the wireless terminal tries not to perform measurement for asymmetric carriers. I n other words, based on CarrierSymmetry included in the received RRCConnectionReconfiguration message, the wireless terminal performs measurement for only symmetric carriers. From this, the wireless terminal transmits, to the serving cell, the measurement report including a measurement result for only the symmetric carriers. I n addition, based on the received measurement report, the serving cell is able to select and determine the target cell from among the symmetric carriers.

Since, by doing so, in the same way as in the fourth embodiment, an asymmetric carrier is not selected as the target cell, it becomes possible to suppress an increase in the delay of the handover processing. I n addition, since the wireless terminal is allowed not to perform measurement of the asymmetric carriers, a processing load on the wireless terminal is reduced.

Since a processing sequence, a network configuration, the functional configurations of the wireless terminal and the wireless base station, and the hardware configurations of the wireless terminal and the wireless base station in the fifth embodiment are equivalent to those in the first embodiment, the description thereof will be omitted.

### [g] Another Embodiment

While the above-mentioned first to fifth embodiments are embodiments in each of which the present invention is applied to an asymmetric carrier where the number of DL carriers is larger than the number of UL carriers, the present invention may be applied to an asymmetric carrier where the number of UL carriers is larger than the number of DL carriers, in the same way.

I n addition, in each of the above-mentioned first to fifth embodiments, the cell (carrier or wireless base station) is desired to understand (store in the storage unit) whether or not each adjacent cell is an asymmetric cell. This point may be realized by causing the cell to preliminarily store, in the storage unit, whether or not each adjacent cell is an asymmetric cell. Alternatively, periodically or at the time of the occurrence of a predetermined event, the cell may receive, from each adjacent cell or an upper layer device, information indicating whether or not each adjacent cell is an asymmetric cell, and thus, the point may be realized.

### Reference Signs List

1 wireless terminal
2 wireless base station

## Claims

1. A wireless terminal that performs wireless communication of which the number of uplink carriers and the number of downlink carriers are different, the wireless terminal comprising:
a reception unit that receives information relating to a first carrier of which an uplink carrier and a downlink carrier are paired and a second carrier of which an uplink carrier and a downlink carrier are not paired; and
a coupling unit that couples to a wireless base station using the first carrier based on the information.

2. The wireless terminal according to claim 1, wherein
the information includes a first identifier of the first carrier or a second identifier of the second carrier, and
the coupling unit receives a wireless signal, and uses the first carrier, based on an identifier of a carrier included in the wireless signal and on the first identifier or the second identifier.

3. The wireless terminal according to claim 1, wherein
the wireless terminal receives the information from a wireless base station different from a wireless base station to which the coupling unit couples.

4. The wireless terminal according to claim 1, wherein
the information is broadcast information.

5. The wireless terminal according to claim 1, wherein
the information is dedicated information.

6. The wireless terminal according to claim 1, wherein
the second carrier includes only a downlink carrier.

7. A wireless base station that performs wireless communication with a wireless terminal that performs wireless communication of which the number of uplink carriers and the number of downlink carriers are different, the wireless base station comprising:
a transmission unit that transmits information relating to a first carrier of which an uplink carrier and a downlink carrier are paired and a second carrier of which an uplink carrier and a downlink carrier are not paired, to the wireless terminal that couples using the first carrier based on the information.

8. A wireless communication system in which a wireless terminal and a wireless base station perform wireless communication of which the number of uplink carriers and the number of downlink carriers are different, wherein
the wireless terminal includes
a reception unit that receives information relating to a first carrier of which an uplink carrier and a downlink carrier are paired and a second carrier of which an uplink carrier and a downlink carrier are not paired, and
a coupling unit that couples to the wireless base station using the first carrier based on the information.

9. A wireless communication method performed in a wireless communication system in which a wireless terminal and a wireless base station perform wireless communication of which the number of uplink carriers and the number of downlink carriers are different, the wireless communication method comprising:
receiving, by the wireless terminal, information relating to a first carrier of which an uplink carrier and a downlink carrier are paired and a second carrier of which an uplink carrier and a downlink carrier are not paired; and
coupling, by the wireless terminal, to the wireless base station using the first carrier based on the information.
